# NEUE EUROPÄISCHE PATENTSCHRIFT

(11) **EP 2 029 306 B2**
(45) Veröffentlichungstag und Bekanntmachung des Hinweises auf die Entscheidung über den Einspruch: **08.10.2014**
(45) Hinweis auf die Patenterteilung: 04.05.2011
(21) Anmeldenummer: 06828631.9
(22) Anmeldetag: 08.12.2006
(51) Int. Cl.: B23F 5/20, B23F 9/10, B23F 17/00, B23F 19/10, B23F 23/04

(54) **WERKZEUGMASCHINE ZUR VERZAHNUNGSBEARBEITUNG VON WERKSTÜCKEN**
MACHINE TOOL FOR MACHINING TOOTHING OF WORK PIECES
MACHINE-OUTIL UTILISEE POUR TAILLER DES ENGRENAGES DE PIECES A USINER

(30) Priorität: 24.04.2006 DE 102006019325
(43) Veröffentlichungstag der Anmeldung: 04.03.2009
(73) Patentinhaber: FELSOMAT GmbH & Co. KG, 75203 Königsbach-Stein (DE)
(72) Erfinder: JAEGER, Helmut, F., 75203 Königsbach-Stein (DE)
(74) Vertreter: Puchinger, Manfred
(86) Internationale Anmeldenummer: PCT/DE2006/002181
(87) Internationale Veröffentlichungsnummer: WO 2007/121694

(56) Entgegenhaltungen:
- EP-A- 0 453 710
- EP-A2- 1 016 499
- DE-A1- 3 701 504
- DE-A1- 19 857 592
- DE-A1- 19 907 617
- DE-T2- 69 822 384
- JP-A- 2002 079 420
- JP-A- 2003 311 502
- Firmenprospekt, "LIEBHERR LCV 40" 08/98
- Firmenprospekt "Gleason p60, 90 07/2003

## Beschreibung

Die Erfindung betrifft eine Werkzeugmaschine zur Verzahnungsbearbeitung von Werkstücken, die einen Drehhalter, der um eine Hauptachse A rotierbar ist, zwei Werkstückspindeln, die auf dem Drehhalter angeordnet sind, und einen Werkzeughalter für ein Werkzeug zur Bearbeitung eines Werkstückes auf einer der Werkzeugspindeln umfasst. Dabei weisen die Werkstückspindeln Spindelachsen auf, die parallel zur Hauptachse A des Drehhalters ausgerichtet sind, und die Werkzeugspindeln sind insbesondere symmetrisch um die Hauptachse A angeordnet.

Eine derartige Werkzeugmaschine ist beispielsweise als Werkzeugmaschine des Typs "Maschine RZ 150" der Firma "Reishauer AG" bekannt.

Mit derartigen Werkzeugmaschinen werden Werkstücke in abspanenden Fertigungsverfahren, bei denen Formen durch Abtrennen von Spänen an Werkstücken ausgebildet werden, bearbeitet. Bei der Verzahnungsbearbeitung wird ein Zahnradkranz durch das Abspanen von regelmäßig beabstandeten Zahnlücken an einer Außenoberfläche eines zu bearbeitenden Werkstückes erzeugt. Die Fertigungskosten pro Werkstück und die Wirtschaftlichkeit einer Werkzeugmaschine hängen von der Flächenleistung, d. h. der in einer Zeitspanne abgespanten Oberfläche eines Werkstücks, sowie dem Verhältnis zwischen Hauptzeit und Nebenzeit ab. Hierbei ist die Hauptzeit die Bearbeitungszeit pro Werkstück und die Nebenzeit die Zeit zum Werkstückwechsel.

Die Anordnung der beiden Werkstückspindeln auf dem Drehhalter dient der Einsparung von Nebenzeit, indem die Bearbeitung eines Werkstückes auf einer der Werkstückspindeln in Bearbeitungsposition und das Be- und Entladen der anderen Werkstückspindel mit einem Werkstück in Transferposition zeitgleich durchgeführt werden, wodurch der gesamte Bearbeitungszyklus und die Taktzeit verkürzt werden. Durch ein Drehen des Drehhalters wechseln die beiden Werkstückspindeln ihre Positionen. Eine Werkstückspindel wird in eine Bearbeitungsposition gedreht bzw. geschwenkt, die andere Werkstückspindel wird aus der Bearbeitungsposition gebracht. Durch eine symmetrische Anordnung der Werkstückspindeln bezüglich der Hauptachse A werden Unwuchtbewegungen der Werkstückspindeln beim Positionswechsel minimiert.

Bei der aus dem Stand der Technik bekannten Werkzeugmaschine der Reishauer AG, siehe oben, sind die Hauptachse A und die Spindelachsen der auf dem Drehhalter angeordneten Werkstückspindeln in vertikaler Richtung ausgerichtet. In dieser Anordnung fallen die bei der Verzahnungsbearbeitung eines Werkstückes abgetrennten Späne auf die darunter liegende Werkstückspindel und den Drehhalter und bilden dort Spannester, die später entfernt werden müssen, um Verschmutzungen und damit verbundene Einschränkungen des Drehhalterlaufs und der Spindelläufe sowie deren Antriebe zu verhindern. Die bekannte Werkzeugmaschine ist darüber hinaus wenig gut geeignet für Verzahnungstechniken, die sich durch eine Vorschubbewegung des Werkzeugs auszeichnen, welche parallel zur Werkstückachse bzw. den Spindelachsen verläuft, wie beispielsweise Längs- oder Axialfräsen. Bei der bekannten Werkzeugmaschine erfordert eine solche parallele Vorschubbewegung, die wie die Spindelachsen parallel zur Hauptachse A und somit vertikal ausgerichtet ist, einen vertikalen Hub des Werkzeughalters und/oder der Werkstückspindeln, was einen hohen konstruktiven Aufwand erfordert.

Die DE 102 56 222 A1 beschreibt eine Wälzfräsmaschine zur Bearbeitung von Spiralkegelrädern. Ein Werkrad ist auf einer horizontal ausgerichteten Werkstückspindel angeordnet, wobei die Werkstückspindel auf einem um eine vertikale Drehachse (P) rotierbaren Spindelträger angeordnet ist. Eine Werkzeugspindel weist einen festen, vorwählbaren Neigungswinkel κ gegenüber einer Orientierungsachse (O) auf, und kann um eine horizontale Achse (T) rotiert werden. Werkstückspindel und Werkzeugspindel können in drei Raumrichtungen linear relativ zueinander verschoben werden.

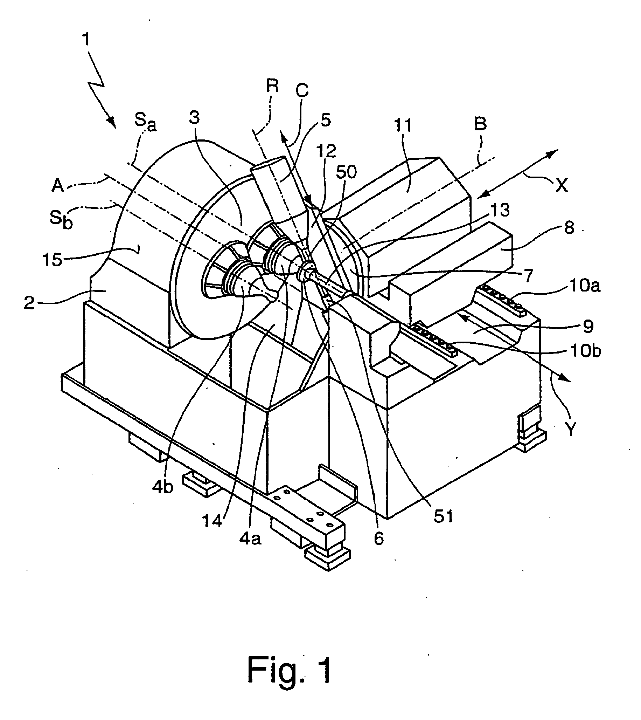

Die DE 20 2004 008263 U, welche den nächstkommenden Stand der Technik bildet, beschreibt
eine Werkzeugmaschine zur Verzahnungsbearbeitung von Werkstücken, umfassend eine Werkstückspindel (Figur 1 (30)), und
einen Werkzeughalter für ein Werkzeug zur Bearbeitung eines Werkstückes auf der Werkstückspindel (Figur 1 (24)), wobei
die Werkzeugmaschine als eine Wälzfräsvorrichtung ausgebildet ist (Figur 1), und wobei die Werkzeugmaschine eine Entgratvorrichtung zur Bearbeitung eines Werkstückes auf der Werkstückspindel aufweist (Figur 1 (40)).

Der Erfindung liegt die Aufgabe zugrunde, die Verschmutzung des Drehhalters und der Werkzeugspindeln durch bei der Verzahnungsbearbeitung eines Werkstückes in der Werkzeugmaschine abgetrennten Späne zu vermindern und den konstruktiven Aufwand für eine relative Vorschubbewegung des Werkszeugs gegenüber dem Werkstück parallel zu den Spindelachsen zu verringern.

Die Aufgabe wird erfindungsgemäß durch die Merkmale des Anspruchs 1 gelöst.

In der erfindungsgemäßen Werkzeugmaschine sind die Hauptachse A des Drehhalters und die Spindelachsen der auf dem Drehhalter angeordneten Werkstückspindeln zumindest annähernd horizontal ausgerichtet. Daraus ergibt sich der Vorteil, dass bei der Bearbeitung eines Werkstückes, das auf einer der Werkstückspindeln angeordnet, beispielsweise eingeklemmt oder eingespannt, ist, anfallende Späne schwerkraftbedingt in vertikale Richtung frei hinabfallen und somit nicht auf den Drehhalter fallen. An der bzw. an den Werkstückspindeln haftende Späne werden durch die Rotation der Werkstückspindel während der Verzahnungsbearbeitung gelöst oder zumindest soweit gelockert, dass die Bildung von Spannestern verhindert wird. Daraus ergibt sich der Vorteil, dass bei der erfindungsgemäßen Werkzeugmaschine auf zusätzliche Vorrichtungen und/oder Verfahrensschritte zur Beseitigung von Spänen an den Werkstückspindeln und dem Drehhalter weitgehend verzichtet werden kann, wodurch der Bearbeitungszyklus in der Werkzeugmaschine weiter verkürzt und folglich die Taktrate weiter erhöht wird.

Insbesondere bei der Trockenbearbeitung kommt es nicht zu einer Erwärmung des Maschinenbetts bzw. des Drehhalters durch aufliegende heiße Späne. Eine mit der Erwärmung einhergehende Wärmedehnung und damit Fertigungsungenauigkeit wird effektiv vermieden.

Aus der horizontalen Lage der Werkstückspindeln ergibt sich der weitere Vorteil, dass eine parallel zu den Spindelachsen gerichtete Vorschubbewegung parallel zur Hauptachse A und folglich horizontal verläuft, mit anderen Worten eine parallele Vorschubbewegung kann bei der erfindungsgemäßen Werkzeugmaschine ohne vertikale Hubbewegung erreicht werden. Im Rahmen des parallelen Vorschubs braucht also weder eine massive Werkstückspindel oder gar der Drehhalter, noch der ebenfalls massive Werkzeughalter gegen die Schwerkraft verschoben zu werden. Vielmehr genügt eine ebene Verfahrbewegung beispielsweise des Werkzeughalters, was nur die Überwindung von Reibungskräften erfordert.

In einer bevorzugten Ausführung der erfindungsgemäßen Werkzeugmaschine ist der Werkzeughalter entlang einer horizontalen Achse X, die senkrecht zur Hauptachse A verläuft, und entlang einer horizontalen Linearachse Y, die parallel zur Hauptachse A verläuft, verschiebbar.

In dieser bevorzugten Ausführung kann der Werkzeughalter entlang der Linearachse X an ein auf der Werkstückspindel, die sich in einer Bearbeitungsposition befindet, herangefahren bzw. herangeschoben werden. Nach Fertigbearbeitung eines Werkstückes, am Ende einer Hauptzeit, kann der Werkzeughalter aus seiner Bearbeitungsstellung wieder zurückgefahren werden. Aufgrund der Verfahrbarkeit des Werkzeughalters entlang der Linearachse X, welche senkrecht zur Spindelachse liegt, können mit einem in dem Werkzeughalter gehaltenen Werkzeug Abspanverfahren mit senkrechter Vorschubbewegung wie beispielsweise Tauch- oder Radialverfahren durchgeführt werden. Verfahren mit paralleler Vorschubbewegung werden durch die Verfahrbarkeit des Werkzeughalters entlang der zur Hauptachse A und den Spindelachsen parallelen Linearachse Y mithilfe der erfindungsgemäßen Werkzeugmaschine durchführbar. Beide Linearachsen X und Y verlaufen horizontal, so dass zum Verschieben des Werkzeughalters entlang dieser Richtungen nur Reibungskräfte überwunden werden müssen. Insbesondere wird eine Verschiebbarkeit des Werkzeughalters entlang der Werkstück- bzw. Werkstückspindelachse ohne Aufwendung einer Hubkraft erreicht. Durch diese konstruktionstechnische Vereinfachung werden die Anschaffungskosten der Werkzeugmaschine und die Fertigungskosten eines mit der Werkzeugmaschine bearbeiteten Werkstückes reduziert.

In einer weiteren bevorzugten Ausgestaltung der erfindungsgemäßen Werkzeugmaschine ist der Werkzeughalter auf einem Rotationshalter angeordnet, der um eine horizontale Rotationsachse B, welche senkrecht zur Hauptachse A verläuft, rotierbar ist.

Der Werkzeughalter kann in dieser vorteilhaften Ausgestaltung durch die Anordnung auf dem Rotationshalter gegenüber dem Werkstück in einer Ebene die senkrecht zur Rotationsachse B verläuft, gekippt bzw. geneigt werden. Daraus ergibt sich der Vorteil, dass mithilfe eines schräggestellten Werkzeuges Zahnräder mit schrägem Profilverlauf und Schneckenräder gefertigt werden können.

Weiter ist der Werkzeughalter bevorzugt auf einem Werkzeugschlitten angeordnet, wobei der Werkzeugschlitten entlang einer Linearachse C, die senkrecht zur Rotationsachse B liegt, gegenüber dem Rotationshalter verfahrbar.

Eine derartige zusätzliche Bewegungsrichtung des Werkzeughalters erlaubt einen schnellen Wechsel des aktiven Abschnitts des Fräswerkzeugs, insbesondere während einer Drehung des Drehhalters, sobald ein aktiver Abschnitt des Werkzeugs stumpf geworden ist. Dadurch kann länger mit einem Fräswerkzeug gearbeitet werden.

Weiter ist die Werkzeugmaschine als eine Wälzfräsvorrichtung mit einem Wälzfräskopf ausgebildet.

Mithilfe einer für ein Wälzverfahren ausgelegten Werkzeugmaschine können an dem Werkstück beliebige Zähnezählen und Profilverschiebungen mit dem gleichen Werkzeug erzeugt werden. Das Wälzfräsen ist zur Vor- und Fertigverarbeitung von Verzahnungen geeignet.

In einer bevorzugten Ausführung der erfindungsgemäßen Werkzeugsmaschine ist der Drehhalter als Trommel ausgebildet, insbesondere wobei die Werkstückspindeln aus der Trommel herausragen.

Bei einer Ausführung des Drehhalters als eine bevorzugt massige Trommel werden Schwingungen der Werkzeugspindeln minimiert und somit die Fertigungsgenauigkeit erhöht. Eine Anordnung der Werkstückspindeln auf einer Oberseite der Trommel bietet den Vorteil, dass die Werkstückspindeln in einer Ebene, die senkrecht zur Hauptachse A verläuft, befestigt sind und frei ins Innere der Werkzeugmaschine ragen, so dass Späne an den Werkstückspindeln frei herabfallen und die Werkstückspindeln leicht zugänglich bestückt werden können.

In einer bevorzugten Ausführungsform der erfindungsgemäßen Werkzeugmaschine weist der Drehhalter einen ersten Anschlag und einen zweiten Anschlag auf, wobei an jedem Anschlag sich jeweils eine erste Werkstückspindel an einer Bearbeitungsposition und eine zweite Werkstückspindel an einer Transferposition befindet.

In dieser Ausführungsform sind die Bearbeitungsposition, in der ein Werkstück auf einer Werkstückspindel mit einem Werkzeug bearbeitet wird, sowie die Transferposition, in der eine Werkstückspindel mit einem Werkstück be- oder entladen werden kann, durch die Anschläge festgelegt. Somit können die Werkstückspindeln in die beiden Positionen durch eine einfache Drehbewegung des Drehhalters gebracht werden, ohne dass zusätzlich gemessen und/oder nachjustiert werden muss.

In einer weiteren bevorzugten Ausgestaltung der Erfindung ist an dem Drehhalter ein motorischer Antrieb vorgesehen.

Mithilfe des Antriebs können die an dem Drehhalter angeordneten Werkstückspindeln in einer kurzen Zeit zwischen der Bearbeitungsposition und der Transferposition wechseln, wodurch der Bearbeitungszyklus weiter verkürzt wird. Im Rahmen der Erfindung lassen sich Positionswechsel der Werkstückspindeln innerhalb von 1 s oder weniger durchführen. Zusammen mit den Zeiten zum Ein- und Ausfahren des Werkzeugs von je 0,5 s oder weniger lässt sich eine Span-zu-Span-Zeit von 2 s und weniger erreichen.

Weiter sind an den Werkstückspindeln bevorzugt motorische Spindelantriebe vorgesehen.

Die motorisch angetriebenen Werkstückspindeln können im angetriebenen, um die Spindelachse rotierenden Zustand in die Bearbeitungsposition gebracht werden. Der Werkzeughalter weist in der Regel ebenfalls einen motorischen Antrieb auf, und das rotierende Werkzeug greift drehzahlsynchronisiert in das rotierende Werkstück. Durch einen Positionswechsel der Werkstückspindeln bei laufenden Werkstückspindeln und laufendern Werkzeug wird der gesamte Bearbeitungszyklus, der sich aus der Bearbeitungszeit und einer Zeit zum Positionswechsel der Werkstückspindeln zusammensetzt, weiter verkürzt.

In einer weiteren bevorzugten Ausführung der Erfindung weist die Werkzeugmaschine einen Gegenhalter auf, der einer Werkstückspindel in einer Bearbeitungsposition gegenüberliegt, insbesondere wobei der Gegenhalter mittels eines Steuerungsrechners programmierbar ist.

Durch den Gegenhalter wird die Werkstückspindel gegenüber während der Werkstückbearbeitung auftretenden Querkräften stabilisiert. Der Gegenhalter wird derart programmiert, dass er die Werkstückspindel nach der Bearbeitung zum Positionswechsel freigibt.

In einer weiteren bevorzugten Ausführung der erfindungsgemäßen Werkzeugmaschine ist auf dem Drehhalter zwischen den Werkstückspindeln ein Schutzschild vorgesehen, insbesondere wobei die Hauptachse A durch den Schutzschild verläuft.

Durch den Schutzschild wird der Drehhalter in Bereiche bzw. Abschnitte mit jeweils einer Werkstückspindel unterteilt. Der als Trennvorrichtung dienende Schutzschild verhindert ein Eindringen von Spänen aus einem Bereich in einen anderen Bereich, so dass gegenseitige Verunreinigungen insbesondere beim Einspannen eines neuen Werkstücks verhindert werden. Bei symmetrisch um die Hauptachse angeordneten Werkstückspindeln ist eine symmetrische Anordnung des Schutzschildes, insbesondere durch die Hauptachse A zur Vermeidung von Unwuchten bei einer Drehbewegung des Drehhalters vorteilhaft.

Erfindungsgemäß weist die Werkzeugmaschine eine Entgratvorrichtung zur Bearbeitung eines Werkstückes auf einer Werkstückspindel, die sich an der Transferposition befindet, auf.

Mithilfe der Entgratvorrichtung kann ein zuvor in der Bearbeitungsposition bearbeitetes Werkstück vor dem Entladen an der Transferposition nachbearbeitet, nämlich entgratet werden. Gegebenenfalls kann auch noch eine Reinigung des Werkstücks erfolgen. Durch die Entgratvorrichtung lässt sich ein nochmaliges Einspannen des Werkstücks für ein nachfolgendes separates Entgraten einsparen.

Weiter ist die Entgratvorrichtung bevorzugt an einer Außenmantelfläche des Drehhalters vorgesehen.

Eine räumliche Anordnung der Entgratvorrichtung oberhalb und/oder seitlich der Werkstückspindel in der Transferposition bietet Vorteile hinsichtlich einer Handhabung der Entgratvorrichtung und einer Konstruktionskomplexität der Werkzeugmaschine.

Bevorzugt weist die Werkzeugmaschine eine Aufspannvorrichtung zum Be- und Entladen einer Werkstückspindel mit einem Werkstück auf, wobei sich die Werkstückspindel an einer Transferposition befindet.

Mithilfe der Aufspannvorrichtung kann die Zeit zum Be- und Entladen der Werkstückspindel weiter verkürzt werden. Bei einer gekoppelten Betätigung des Drehhalters, der Werkstückspindeln, des Werkzeugs bzw. des Werkzeughalters, ggf. der Entgratvorrichtung und der Aufspannvorrichtung können die Bearbeitungszeit und die Positionswechselzeit, also der gesamte Bearbeitungszyklus, minimiert werden.

Weitere Vorteile der Erfindung ergeben sich aus der Figur und der Beschreibung der Zeichnung. Die erfindungsgemäße Werkzeugmaschine ist in einem Ausführungsbeispiel in der Figur der Zeichnung gezeigt. Die in der Figur gezeigten Merkmale sind rein schematisch und nicht maßstäblich zu verstehen.

Es zeigt:
- Figur 1: eine beispielhafte, erfindungsgemäße Werkzeugmaschine zur Ver- zahnungsbearbeitung von Werkstücken.

In **Figur 1** ist in einer schematischen Schrägansicht eine Werkzeugmaschine 1 mit einem Gehäuse 2 gezeigt. Auf einem in der Figur hinteren Abschnitt des Gehäuses 2 ist ein Drehhalter 3 angeordnet, wobei der Drehhalter 3 als Trommel ausgebildet ist und drehbar um eine Hauptachse A gelagert ist. Auf einer zum Inneren der Werkzeugmaschine 1 gerichteten Oberseite des Drehhalters 3 sind eine erste Werkstückspindel 4a und eine zweite Werkstückspindel 4b angeordnet. Die Werkstückspindeln 4a und 4b ragen aus dem trommelartigen Drehhalter 3 heraus und sind parallel zur Hauptachse A ausgerichtet. Mit anderen Worten die erste Werkstückspindel 4a weist eine erste Spindelachse Sₐ, und die zweite Werkstückspindel 4b weist eine zweite Spindelachse S_{b} auf, wobei beide Spindelachsen Sₐ und S_{b} parallel zur Hauptachse A verlaufen. Die Werkstückspindeln 4a und 4b sind symmetrisch auf dem Drehhalter 3, hier punktsymmetrisch zur Hauptachse A, angeordnet, wodurch Unwuchten beim Bewegen der Werkstückspindeln 4a und 4b durch ein Drehen des Drehhalters 3 um die Hauptachse A weitgehend vermieden werden. Die Hauptachse A und infolgedessen auch die Spindelachsen Sₐ und S_{b} sind horizontal ausgerichtet.

Der Drehhalter 3 und die Werkstückspindeln 4a und 4b sind motorisch angetrieben. Durch zwei am Drehhalter 3 vorgesehene Anschläge sind eine Bearbeitungsposition und eine Transferposition für die Werkstückspindeln 4a, 4b festgelegt. Die beiden Werkstückspindeln 4a, 4b wechseln jeweils durch ein Drehen des Drehhalters 3 zwischen der Bearbeitungsposition und der Transferposition. In der Figur befindet sich die erste Werkstückspindel 4a an der Bearbeitungsposition und die zweite Werkstückspindel 4b an der Transferposition.

Neben der ersten Werkstückspindel 4a ist ein im Wesentlichen zylindrischer Werkzeughalter 5 angeordnet, in dem ein längliches Werkzeug 50, nämlich ein Wälzfräser, eingespannt bzw. befestigt ist. Das in dem Werkzeughalter 5 gehaltene Werkzeug 50 wird durch ein an einer gegenüberliegenden Seite des Gehäuses 2 befestigtes Gegenlager 51 in seiner Lage stabilisiert. In der gezeigten Lage liegt das Werkzeug 50 an einem Werkstück 6 an, welches auf der ersten Werkstückspindel 4a angeordnet ist. Das Werkzeug 50 ist im Werkzeughalter 5 um eine Werkzeugrotationsachse R rotierbar, insbesondere motorisch.

Während das Werkstück 6 in der Bearbeitungsposition mithilfe des Werkzeugs 50 bearbeitet wird, wird zeitgleich an der Transferposition die zweite Werkstückspindel 4b entladen und anschließend mit einem neuen Werkstück beladen. Durch das zeitgleiche, parallele Durchführen von Verfahrensschritten an zwei unterschiedlichen Werkstückspindeln 4a und 4b in zwei räumlich getrennten Positionen, der Bearbeitungsposition und der Transferposition, wird der gesamte Bearbeitungszyklus verkürzt, da Hauptzeit und Nebenzeit parallel verlaufen.

Durch die direkt angetriebenen Werkstückspindeln 4a und 4b und das direkt angetriebene Werkzeug 50 können durch hohe Antriebsleistungen und Drehzahlen eine kurze Bearbeitungszeit und somit eine hohe Auslastung der Werkzeugmaschine 1 erreicht werden. Durch ein drehzahlsynchronisiertes Antreiben der ersten Werkstückspindel 4a beim Eintritt in die Bearbeitungsposition kann auf ein Abbremsen und/oder Verlangsamen des Werkzeugs 50 bzw. des Werkzeughalters 5 verzichtet werden, was zu einer weiteren Verkürzung des Bearbeitungszyklus führt.

Der Werkzeughalter 5 ist auf einem Rotationshalter 7 angeordnet, welcher um eine horizontale Rotationsachse B rotierbar ist. Der Werkzeughalter 5 ist weiter entlang einer horizontalen Linearachse X, die senkrecht zur Hauptachse A verläuft, und entlang einer horizontalen Linearachse Y, die parallel zur Hauptachse A verläuft, verschiebbar. Hierfür ist die gesamte Werkzeughalteranordnung auf einem flachen Träger 8 angeordnet. Der Träger 8 ist entlang einer Fahrbahn 9 auf Schienen 10a und 10b verschiebbar. Die Schienen 10a und 10b sind parallel zur Hauptachse A ausgerichtet. Eine Bewegung des Werkzeughalters 5 entlang der Linearachse X wird dadurch erreicht, dass der Rotationshalter 7 in einem länglichen Rotationshaltergehäuse 11 angeordnet ist, wobei das Rotationshaltergehäuse 11 auf dem Träger 8 in die Richtung der Linearachse X verschiebbar ist. Die Linearachsen X und Y sind wie die Hauptachse A und die Spindelachsen Sₐ und S_{b} horizontal ausgerichtet. Somit ist ein Verfahren des Werkzeughalters 5 gegenüber dem Werkstück 6 und der ersten Werkstückspindel 4a durch lineare Verfahrungen bzw. Bewegungen in einer horizontalen Ebene möglich, woraus sich der Verzicht auf eine vertikale Hubbewegung und somit ein vereinfachter Aufbau der Werkzeugmaschine 1 ergibt.

Der Werkzeughalter 5 ist zusätzlich auf einem im Wesentlichen rechteckförmigen Werkzeugschlitten 12 angeordnet und mit diesem entlang einer Linearachse C gegenüber dem Rotationshalter 7 verschiebbar. Die Linearachse C liegt senkrecht zur Rotationsachse B. Durch die Bewegungsrichtungen und Freiheitsgrade des Werkzeughalters 5 können Zahnradkränze mit unterschiedlichen Profilformen sowie Zahnzahlen auf dem Werkstück 6 erzeugt werden.

Gegenüber der ersten Werkstückspindel 4a ist ein Gegenhalter 13 angeordnet, der auf einer Seite des Gehäuses 2 angeordnet ist, welche dem Drehhalter 3 gegenüber liegt. Der Gegenhalter 13 ist entlang der ersten Spindelachse Sₐ ausgerichtet und liegt an einer Spitze der ersten Werkstückspindel 4a an. Er stabilisiert auf diese Weise die erste Werkstückspindel 4a in der Bearbeitungsposition. Ein Stabilisieren bzw. Verriegeln der ersten Werkstückspindel 4a in der Bearbeitungsposition bzw. eine entsprechende Freigabe durch den Gegenhalter 13 kann durch eine elektronische Steuerung des Gegenhalters 13 erreicht werden.

Bei der Bearbeitung des Werkstücks 6 mithilfe der Werkzeugmaschine 1 anfallende Späne fallen schwerkraftbedingt in vertikale Richtung nach unten und werden dort in einer im Gehäuse 2 vorgesehenen, trichterförmigen Spansammelvorrichtung 14 aufgenommen. Die unterhalb der Werkstückspindeln 4a und 4b liegende Spansammelvorrichtung 14 ist von außen leicht zugänglich. Durch den Späneabfluss bzw. Späneabfall in vertikaler Richtung wird ein Kontakt von Spänen mit dem Drehhalter 3 und den Werkstückspindeln 4a und 4b und insbesondere mit den an ihnen vorgesehenen Antrieben weitgehend verhindert.

Das Be- und Entladen der zweiten Werkstückspindel 4b kann mithilfe einer Aufspannvorrichtung verkürzt werden. Die Hauptzeit, d. h. die Zeit zur Bearbeitung des Werkstückes 6 in der Bearbeitungsposition, kann zudem zur Nachverarbeitung eines zuvor dort bearbeiteten Werkstücks in der Transferposition genutzt werden. Hierfür ist eine Entgratvorrichtung vorgesehen, die bevorzugt an einer Außenmantelfläche 15 des Drehhalters 3 befestigt ist. Eine auf der Außenmantelfläche 15 angeordnete Entgratvorrichtung greift seitlich, insbesondere von oben, an ein Werkstück auf der zweiten Werkstückspindel 4b und behindert somit nicht die Zugänglichkeit der Transferposition. Durch Hauptzeit-paralleles Entgraten sowie Be- und Entladen wird die Wirtschaftlichkeit der Werkzeugmaschine 1 weiter erhöht.

Durch einen Schutzschild oder eine Trennwand (nicht dargestellt) zwischen den auf dem Drehhalter 3 angeordneten Werkstückspindeln 4a, 4b wird der Kontakt zwischen im Bearbeitungsprozess anfallenden Spänen und nicht bearbeiteten Werkstücken und den entsprechenden Werkstückspindeln vermieden und eine Abfuhr der Späne in die Spansammelvorrichtung 14 sichergestellt.

Weitere horizontale Anordnungen von zwei oder mehreren Werkstückspindeln auf einem horizontal ausgerichteten Drehhalters sind denkbar. Erfindungsgemäß können insbesondere auch drei Werkstückspindeln, beispielsweise in Winkelabständen von 120° bei gleichem radialen Abstand um die Hauptachse A verteilt, auf einem horizontal ausgerichteten Drehhalter angeordnet sein.

## Patentansprüche

1. Werkzeugmaschine (1) zur Verzahnungsbearbeitung von Werkstücken, umfassend
- einen Drehhalter (3), der um eine Hauptachse A rotierbar ist,
- zwei Werkstückspindeln (4a, 4b), die auf dem Drehhalter (3) angeordnet sind, wobei die Werkstückspindeln (4a, 4b) jeweils durch ein Drehen des Drehhalters (3) zwischen einer Bearbeitungsposition und einer Transferposition wechseln, wobei die Werkstückspindeln (4a, 4b) Spindelachsen (Sₐ, S_{b}) aufweisen, die parallel zur Hauptachse A ausgerichtet sind, wobei die Hauptachse A des Drehhalters (3) horizontal verläuft, insbesondere wobei die Werkstückspindeln (4a, 4b) symmetrisch um die Hauptachse A angeordnet sind, und
- einen Werkzeughalter (5) mit einem Werkzeug (50) zur Bearbeitung eines Werkstückes (6) auf einer der Werkstückspindeln (4a) in der Bearbeitungsposition, wobei die Werkzeugmaschine als eine Wälzfräsvorrichtung ausgebildet ist, und das Werkzeug (50) ein Wälzfräser ist, und die Werkzeugmaschine eine Entgratvorrichtung zur Bearbeitung eines Werkstückes auf einer der Werkstückspindeln (4b), die sich an der Transferposition befindet, aufweist.

2. Werkzeugmaschine nach Anspruch 1,
**dadurch gekennzeichnet, dass**
der Werkzeughalter (5) entlang einer horizontalen Linearachse X, die senkrecht zur Hauptachse A verläuft, und entlang einer horizontalen Linearachse Y, die parallel zur Hauptachse A verläuft, verschiebbar ist.

3. Werkzeugmaschine nach Anspruch 1 oder 2,
**dadurch gekennzeichnet, dass**
der Werkzeughalter (5) auf einem Rotationshalter (7) angeordnet ist, der um eine horizontale Rotationsachse B, welche senkrecht zur Hauptachse A verläuft, rotierbar ist.

4. Werkzeugmaschine nach Anspruch 3,
**dadurch gekennzeichnet, dass**
der Werkzeughalter (5) auf einem Werkzeugschlitten (12) angeordnet ist, wobei der Werkzeugschlitten (12) entlang einer Linearachse C, die
senkrecht zur Rotationsachse B liegt, gegenüber dem Rotationshalter (7) verfahrbar ist.

5. Werkzeugmaschine nach einem der vorhergehenden Ansprüche,
**dadurch gekennzeichnet, dass**
der Drehhalter (3) als Trommel ausgebildet ist, insbesondere wobei die Werkstückspindeln (4a, 4b) aus der Trommel herausragen.

6. Werkzeugmaschine nach einem der vorhergehenden Ansprüche,
**dadurch gekennzeichnet, dass**
der Drehhalter (3) einen ersten Anschlag und einen zweiten Anschlag aufweist, wobei an jedem Anschlag sich jeweils eine erste Werkstückspindel (4a) an einer Bearbeitungsposition und eine zweite Werkstückspindel (4b) an einer Transferposition befindet.

7. Werkzeugmaschine nach einem der vorhergehenden Ansprüche,
**dadurch gekennzeichnet, dass**
an dem Drehhalter (3) ein motorischer Antrieb vorgesehen ist.

8. Werkzeugmaschine nach einem der vorhergehenden Ansprüche,
**dadurch gekennzeichnet, dass**
an den Werkstückspindeln (4a, 4b) motorische Spindelantriebe vorgesehen sind.

9. Werkzeugmaschine nach einem der vorhergehenden Ansprüche,
**dadurch gekennzeichnet, dass**
die Werkzeugmaschine einen Gegenhalter (13) aufweist, der einer Werkstückspindel (4a) in einer Bearbeitungsposition gegenüberliegt,
insbesondere wobei der Gegenhalter (13) mittels eines Steuerungsrechners programmierbar ist.

10. Werkzeugmaschine nach einem der vorhergehenden Ansprüche,
**dadurch gekennzeichnet, dass**
auf dem Drehhalter (3) zwischen den Werkstückspindeln (4a, 4b) ein
Schutzschild vorgesehen ist, insbesondere wobei die Hauptachse A durch das Schutzschild verläuft.

11. Werkzeugmaschine nach einem der vorhergehenden Ansprüche,
**dadurch gekennzeichnet, dass**
die Entgratvorrichtung an einer Außenmantelfläche (15) des Drehhalters (3) vorgesehen ist.

12. Werkzeugmaschine nach einem der vorhergehenden Ansprüche,
**dadurch gekennzeichnet, dass**
die Werkzeugmaschine eine Aufspannvorrichtung zum Be- und Entladen einer Werkstückspindel (4b) mit einem Werkstück aufweist, wobei sich die Werkstückspindel (4b) an einer Transferposition befindet.

## Claims

1. Machine tool (1) for processing tooth formations of workpieces, comprising
- a rotary holder (3) which can be rotated about a main axis A,
- two workpiece spindles (4a, 4b) which are arranged on the rotary holder (3), wherein the workpiece spindles (4a, 4b) change between a processing position and a transfer position by rotating the rotary holder (3) in each case, with the workpiece spindles (4a, 4b) having spindle axes (Sₐ, S_{b}) which are orientated parallel to the main axis A, with the main axis A of the rotary holder (3) extending horizontally, in particular with the workpiece spindles (4a, 4b) being arranged symmetrically about the main axis A, and
- a tool holder (5) comprising a tool (50) for processing a workpiece (6) on one of the workpiece spindles (4a) in the processing position, wherein the machine tool is in the form of a gear hobbing device and the tool (50) is a hob cutter,
and the machine tool has a deburring device for processing a workpiece on one of the workpiece spindles (4b) which is at the transfer position.

2. Machine tool according to claim 1,
**characterised in that**
the tool holder (5) can be displaced along a horizontal linear axis X which extends perpendicularly relative to the main axis A and along a horizontal linear axis Y which extends parallel to the main axis A.

3. Machine tool according to claim 1 or 2,
**characterised in that**
the tool holder (5) is arranged on a rotary holder (7) which can be rotated about a horizontal axis of rotation B which extends perpendicularly relative to the main axis A.

4. Machine tool according to claim 3,
**characterised in that**
the tool holder (5) is arranged on a tool carriage (12), with the tool carriage (12) being movable relative to the rotary holder (7) along a linear axis C which is perpendicular relative to the axis of rotation B.

5. Machine tool according to any one of the preceding claims, **characterised in that**
the rotary holder (3) is in the form of a cylinder, in particular with the workpiece spindles (4a, 4b) projecting out of the cylinder.

6. Machine tool according to any one of the preceding claims, **characterised in that**
the rotary holder (3) has a first stop and a second stop, with a first workpiece spindle (4a) being at a processing position and a second workpiece spindle (4b) being at a transfer position at each stop.

7. Machine tool according to any one of the preceding claims, **characterised in that**
a motor drive is provided on the rotary holder (3).

8. Machine tool according to any one of the preceding claims, **characterised in that**
motor-driven spindle drives are provided on the workpiece spindles (4a, 4b).

9. Machine tool according to any one of the preceding claims, **characterised in that**
the machine tool has a counter-holder (13) which faces a workpiece spindle (4a) in a processing position, in particular with the counter-holder (13) being programmable by means of a control computer.

10. Machine tool according to any one of the preceding claims, **characterised in that**
a protective shield is provided on the rotary holder (3) between the workpiece spindles (4a, 4b), in particular with the main axis A extending through the protective shield.

11. Machine tool according to any one of the preceding claims, **characterised in that**
the deburring device is provided on an outer surface (15) of the rotary holder (3).

12. Machine tool according to any one of the preceding claims, **characterised in that**
the machine tool has a clamping device for loading and unloading a workpiece in/from a workpiece spindle (4b), with the workpiece spindle (4b) being at a transfer position.

## Revendications

1. Machine-outil (1) pour usiner des dentures sur des pièces d'oeuvre, comprenant :
- un dispositif de maintien rotatif (3), qui est rotatif autour d'un axe principal A,
- deux broches porte-pièce (4a, 4b), qui sont disposées sur le dispositif de maintien rotatif (3), les broches porte-pièce (4a, 4b) commutant entre une position d'usinage et une position de transfert à chaque fois par rotation du dispositif de maintien rotatif (3), les broches porte-pièce (4a, 4b) présentant des axes de broches (Sₐ, S_{b}) qui sont orientés parallèlement à l'axe principal A, l'axe principal A du dispositif de maintien rotatif (3) s'étendant horizontalement, les broches porte-pièce (4a, 4b) étant notamment disposées symétriquement autour de l'axe principal A,
- et un porte-outil (5) avec un outil (50) destiné à usiner une pièce (6) sur une (4a) des broches porte-pièce, dans la position d'usinage,
sachant que la machine-outil est réalisée sous la forme d'un dispositif de fraisage en développante et que l'outil (50) est une fraise développante, et que la machine-outil présente un dispositif d'ébavurage pour usiner une pièce sur une des broches porte-pièce (4b) qui se trouve dans la position de transfert.

2. Machine-outil selon la revendication 1, **caractérisée en ce que** le porte-outil (5) peut être déplacé le long d'un axe linéaire horizontal X qui s'étend perpendiculairement à l'axe principal A, et le long d'un axe linéaire horizontal Y qui s'étend parallèlement à l'axe principal A.

3. Machine-outil selon la revendication 1 ou 2, **caractérisée en ce que** le porte-outil (5) est disposé sur un dispositif de maintien rotatif (7) qui est rotatif autour d'un axe de rotation horizontal B qui s'étend perpendiculairement à l'axe principal A.

4. Machine-outil selon la revendication 3, **caractérisée en ce que** le porte-outil (5) est disposé sur un chariot porte-outil (12), sachant que le chariot porte-outil (12) peut être déplacé par rapport au dispositif de maintien rotatif (7) le long d'un axe linéaire C qui est perpendiculaire à l'axe de rotation B.

5. Machine-outil selon l'une des revendications précédentes, **caractérisée en ce que** le dispositif de maintien rotatif (3) est réalisé sous forme de tambour, sachant notamment que les broches porte-pièce (4a, 4b) dépassent hors du tambour.

6. Machine-outil selon l'une des revendications précédentes, **caractérisée en ce que** le dispositif de maintien rotatif (3) présente une première butée et une deuxième butée, sachant que contre chaque butée, respectivement, une première broche porte-pièce (4a) se trouve dans une position d'usinage et une deuxième broche porte-pièce (4b) se trouve dans une position de transfert.

7. Machine-outil selon l'une des revendications précédentes, **caractérisée en ce qu'**un entraînement motorisé est prévu sur le dispositif de maintien rotatif (3).

8. Machine-outil selon l'une des revendications précédentes, **caractérisée**
**en ce que** des entraînements de broche motorisés sont prévus sur les broches porte-pièce (4a, 4b).

9. Machine-outil selon l'une des revendications précédentes, **caractérisée en ce que** la machine-outil présente un élément de contre-appui (13) qui fait face à une broche porte-pièce (4a) dans une position d'usinage, sachant notamment que l'élément de contre-appui (13) peut être programmé au moyen d'un calculateur de commande.

10. Machine-outil selon l'une des revendications précédentes, **caractérisée en ce qu'**un bouclier de protection est prévu entre les broches porte-pièce (4a, 4b) sur le dispositif de maintien rotatif (3), sachant notamment que l'axe principal A passe par le bouclier de protection.

11. Machine-outil selon l'une des revendications précédentes, **caractérisée en ce que** le dispositif d'ébavurage est prévu sur une surface périphérique extérieure (15) du dispositif de maintien rotatif (3).

12. Machine-outil selon l'une des revendications précédentes, **caractérisée en ce que** la machine-outil présente un dispositif de serrage pour charger une broche porte-pièce (4b) d'une pièce d'oeuvre et l'en décharger, la broche porte-pièce (4b) se trouvant dans une position de transfert.
